# EUROPEAN PATENT APPLICATION

(11) **EP 4 585 422 A1**
(43) Date of publication of application: **16.07.2025**
(21) Application number: 25150904.8
(22) Date of filing: 09.01.2025
(51) Int. Cl.: B41J 2/165, C09D 11/102, C09D 11/322, C09D 11/38

(54) **IMAGE FORMING SYSTEM AND IMAGE FORMING METHOD**

(30) Priority: 12.01.2024 JP 2024002920
(71) Applicant: KONICA MINOLTA, INC., Tokyo 100-7015 (JP)
(72) Inventor: Nito, Ken, Tokyo, 100-7015 (JP)
(74) Representative: Hoffmann Eitle

(57) **Abstract**

Provided is an image forming system using ink, the image forming system including: an inkjet head that ejects the ink onto a recording medium; and a wiping mechanism that rubs and cleans a nozzle face of the inkjet head. The ink contains a silicone resin. A content A of an oily silicone compound in the ink is less than 1000 ppm by mass.

## Description

### CROSS-REFERENCE TO RELATED APPLICATIONS

The entire disclosure of Japanese Patent Application No. 2024-002920 filed on January 12, 2024, is incorporated herein by reference in its entirety.

### BACKGROUND OF THE INVENTION

### Technical Field

The present invention relates to an image forming system and an image forming method.

### Description of Related Art

Image formation using ink employs a printing method in which ink components are deposited on the surface of a recording medium, and therefore color fastness to rubbing can be a defect. On the other hand, when a silicone resin is contained in an ink, the slipperiness of image surface can be improved and the color fastness to rubbing can be improved (see JP2023053764A and JP4982483B2).

However, when a silicone resin is contained in an ink, an oily silicone compound may be brought into the ink together with the silicone resin. It has been confirmed that when an ink containing a large amount of an oil-like silicone compound is ejected from a nozzle by an inkjet method, an oil-like deposit is generated on the nozzle face and causes more ejection failures.

The present invention has been made in view of the above-mentioned situations. A problem to be solved by the present invention is to provide an image forming system and an image forming method that achieve both the color fastness to rubbing of images and the ejection suitability of ink.

### SUMMARY OF THE INVENTION

To achieve at least one of the abovementioned objects, according to an aspect of the present invention, provided is an image forming system using ink, the image forming system including:
an inkjet head that ejects the ink onto a recording medium; and
a wiping mechanism that rubs and cleans a nozzle face of the inkjet head,
wherein the ink contains a silicone resin;
wherein a content A of an oily silicone compound in the ink is less than 1000 ppm by mass.

To achieve at least one of the abovementioned objects, according to another aspect of the present invention, provided is an image forming method using ink, the method including:
ejection of the ink by an inkjet head to a recording medium; and
cleaning of a nozzle face of the inkjet head by a wiping mechanism,
wherein the ink contains a silicone resin,
wherein a content A of an oily silicone compound in the ink is less than 1000 ppm by mass.

### BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:
- Fig. 1: is a schematic diagram of an image forming system;
- Fig. 2: is a schematic diagram of an example of a roller-type wiping mechanism;
- Fig. 3: is a schematic diagram of an example of a blade-type wiping mechanism;
- Fig. 4: is a schematic diagram of an example of a web-type wiping mechanism; and
- Fig. 5: is a schematic diagram of an example of a web-type wiping mechanism.

### DETAILED DESCRIPTION

Hereinafter, one or more embodiments of the present invention will be described with reference to the drawings. However, the scope of the invention is not limited to the disclosed embodiments.

Hereinafter, an embodiment of the present invention will be described. The effects and features of one or more embodiments of the present invention will be understood from the following detailed description and drawings. It should be noted that the following detailed description and drawings are provided for illustration only and thus do not limit the scope of the present invention.

Hereinafter, one or more embodiments of the present invention will be described with reference to the drawings. However, the scope of the present invention is not limited to the disclosed embodiments.

In the present description, when two figures are used to indicate a range of value before and after "to", these figures are included in the range as a lower limit value and an upper limit value.

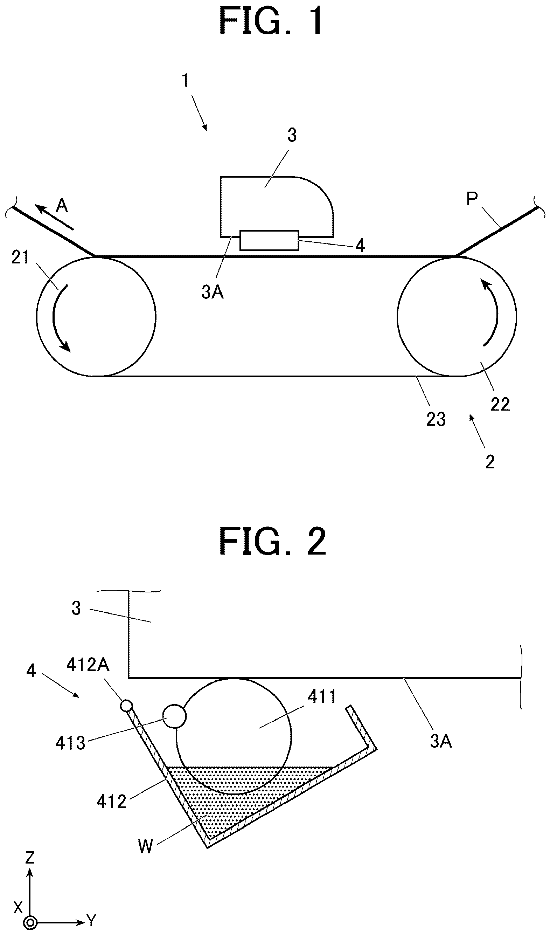

Fig. 1 is a schematic diagram of an image forming system 1 according to an embodiment of the present invention. The image forming system 1 shown in Fig. 1 is of an inkjet type, and includes a belt conveyance device 2, an inkjet head 3, and a wiping mechanism 4.

In the belt conveyance device 2, an endless conveyance belt 23 having a predetermined width is stretched around a driving roller 21 and a driven roller 22 which are arranged in parallel with each other at a predetermined interval.

An upper surface of the conveyance belt 23 looped around the driving roller 21 and the driven roller 22 is a placement surface on which the recording medium P is placed in close contact therewith. The surface of the conveyance belt 23 may be coated with an adhesive to convey the recording medium P being attached to the upper surface of the conveyance belt 23.

The driving roller 21 is driven by a motor (not shown) and rotates at a predetermined speed in a counterclockwise direction (arrow direction) in Fig. 1. By this operation, the recording medium P placed on the upper surface of the conveyance belt 23 is conveyed in the direction of arrow A in the drawing.

The recording medium P may be any recording medium commonly used in inkjet recording, such as a fabric, paper, a plastic film, or a glass plate. The recording medium P may be in the form of a sheet cut to a predetermined size, or may be in the form of a long sheet continuously fed from an original roll.

When the recording medium P is a fabric, the color fastness to rubbing of an image is likely to be a defect in the related art, but by applying the present embodiment, the color fastness to rubbing of an image is less likely to be a defect even when the recording medium P is a fabric.

The fabric may be, for example, a fabric containing natural fibers (including natural cellulose fibers, hemp, wool, silk, and the like), synthetic cellulose fibers (including regenerated cellulose fibers such as rayon and the like, and semisynthetic cellulose fibers such as acetate and the like), vinylon fibers, nylon fibers, acrylic fibers, polyurethane fibers, polyester fibers, and the like. The fabric may be any form of these fibers, such as a woven fabric, a nonwoven fabric, and a knitted fabric. Furthermore, the fabric may be a blended woven fabric or a blended nonwoven fabric of two or more kinds of fibers.

A belt cleaning device (not shown) may be provided on the side of the belt conveyance device 2 opposite to the side on which the recording medium P is placed. The belt cleaning device removes foreign matters adhering to conveyance belt 23.

The inkjet head 3 is disposed at a predetermined interval above a placement surface of the recording medium P on the conveyance belt 23. The inkjet head 3 has a nozzle face 3A having a large number of nozzles on its lower surface. The inkjet head 3 records a desired image on the recording medium P by ejecting ink from the nozzle face 3A toward the recording medium P conveyed by the conveyance belt 23.

In the embodiment shown in Fig. 1, the inkjet head 3 is of a line type, fixedly bridged over the conveyance belt 23 in a width direction thereof. In this type, the driving of the driving roller 21 is controlled such that the conveyance belt 23 continuously moves (performs a rotating operation) during recording.

In addition, the inkjet head 3 may be of a shuttle type which is mounted on a carriage (not shown) and reciprocates in a main scanning direction orthogonal to the conveyance direction of the recording medium P. In this type, the driving of the driving roller 21 is controlled such that the conveyance belt 23 performs an intermittent operation of repeating a standby state and a driving state during recording.

The wiping mechanism 4 rubs and cleans the nozzle face 3A of the inkjet head 3. The phrase "rub and clean the nozzle face 3A" refers to an action of cleaning the nozzle face 3A as the wiping mechanism 4 applies a force at least in a surface direction in contact with the nozzle face. A cleaning mechanism that cleans the nozzle face by only pressing the wiping mechanism 4 against the nozzle face 3A in a vertical direction is not included in the wiping mechanism 4 according to the present embodiment.

In a case where the image forming system 1 does not include a cleaning mechanism for the nozzle face 3A, or in a case where the image forming system 1 includes only a cleaning mechanism of a type in which the nozzle face 3A is cleaned without being rubbed, the nozzle face 3A is not sufficiently cleaned, causing more ejection failures. In particular, in a case where the ink contains a silicone resin, an oily silicone compound which is brought into the ink together with the silicone resin tends to adhere to the nozzle face 3A, and therefore, the problem becomes prominent. On the other hand, in the image forming system 1 in the present embodiment, since the nozzle face 3A of the inkjet head 3 is appropriately cleaned by the wiping mechanism 4, the ejection suitability of the ink is improved.

The wiping mechanism 4 may be of a roller type, a blade type, a web type, or the like. In light of the cleaning performance, the wiping mechanism 4 is preferably of a roller type using a water-absorbent sponge roller.

Fig. 2 is a schematic diagram of an example of the roller-type wiping mechanism 4.

The roller-type wiping mechanism 4 shown in Fig. 2 includes a rubbing member 411, a storage member 412, and a squeezing member 413. The wiping mechanism 4 can move in the Y direction relative to the nozzle face 3A of the inkjet head 3. The Y direction may be determined as appropriate. The Y direction may be, for example, the conveyance direction of the conveyance belt 23 or the width direction of the conveyance belt 23.

The wiping mechanism 4 is configured to reciprocate between one end and the other end in the Y direction of the nozzle face 3A. The roller-type wiping mechanism 4 relatively moves in the Y direction while keeping the rubbing member 411 in contact with the nozzle face 3A, and rubs the nozzle face 3A. Thus, the roller-type wiping mechanism 4 cleans deposits on the nozzle face 3A.

At this time, the nozzle face 3A may be rubbed by the wiping mechanism 4 as the wiping mechanism 4 moves in the Y direction, or the nozzle face 3A may be rubbed by the wiping mechanism 4 as the inkjet head 3 moves in the Y direction. Furthermore, in a case where the inkjet head 3 is immovable, in order to secure a region in which the wiping mechanism 4 can move, for example, the belt conveyance device 2 is configured to retract from the region. Furthermore, in a case where the inkjet head 3 is movable, for example, the wiping mechanism 4 is disposed at a position different from the belt conveyance device 2 in the Y direction, and the inkjet head 3 is configured to move to a position corresponding to the wiping mechanism 4.

The rubbing member 411 is a roller member that rubs an deposit attached to the nozzle face 3A of the inkjet head 3. The surface layer of the rubbing member 411 is an elastic member capable of absorbing deposits such as ink. The elastic member is, for example, a porous substance such as a sponge. The material of the elastic member is preferably a material having open cells, such as a plastic polymer, and more preferably a polyurethane material which easily absorbs a cleaning liquid, ink, and the like. The rubbing member 411 is preferably a water-absorbent sponge roller in light of the cleaning performance. The water-absorbent sponge roller is a roller whose surface layer is formed of an absorbent sponge.

The rubbing member 411 is, for example, rotatably supported by a housing (not shown) constituting the wiping mechanism 4. The rubbing member 411 rotates so as to rub the nozzle face 3A of the inkjet head 3 with the relative movement of the wiping mechanism 4 in the Y direction. The rotation direction of the rubbing member 411 is not limited as long as the rubbing member 411 rotates so as to rub the nozzle face 3A of the inkjet head 3.

The storage member 412 is, for example, a container that can store the cleaning liquid W in which the rubbing member 411 can be immersed. The cleaning liquid W may be any liquid as long as it can clean the nozzle face 3A, and is pure water, for example.

The storage member 412 is arranged at a position where the rubbing member 411 enters the inside thereof, and is supported by a predetermined rotation shaft 412A so as to be rotatable. The rotation shaft 412A is provided at an appropriate position of a housing of the wiping mechanism 4.

A predetermined amount of cleaning liquid W is stored in the storage member 412. The storage member 412 may rotate so as to immerse the rubbing member 411 in the cleaning liquid W or separate the rubbing member 411 from the cleaning liquid W.

The squeezing member 413 is, for example, a shaft member extending in the X direction, and is disposed to face the rubbing member 411 in the Y direction. The squeezing member 413 can press the surface layer of the rubbing member 411. The squeezing member 413 presses and squeezes the surface layer of the rubbing member 411, thereby making it possible to adjust the water content in the rubbing member 411 that has absorbed the cleaning liquid W to be lower than that before the adjustment.

The squeezing member 413 may have any configuration as long as it can squeeze out the cleaning liquid from the surface layer of the rubbing member 411. The squeezing member 413 may be able to adjust the amount of pressure applied to the rubbing member 411.

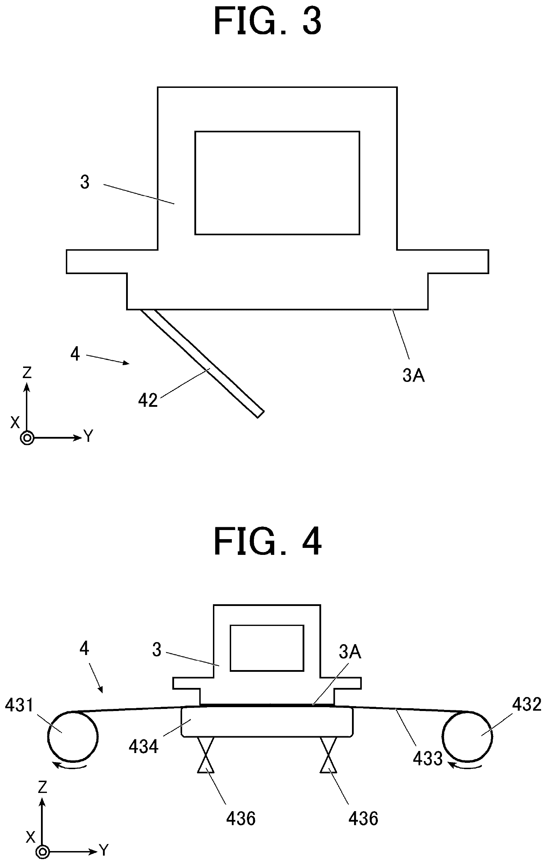

Fig. 3 is a schematic diagram of an example of the blade-type wiping mechanism 4. The blade-type wiping mechanism 4 shown in Fig. 3 includes a blade member 42. The blade member 42 is made of, for example, plate-like rubber. The blade-type wiping mechanism 4 relatively moves in the Y direction while keeping the blade member 42 in contact with the nozzle face 3A, and rubs the nozzle face 3A. Thus, the blade-type wiping mechanism 4 cleans deposits on the nozzle face 3A.

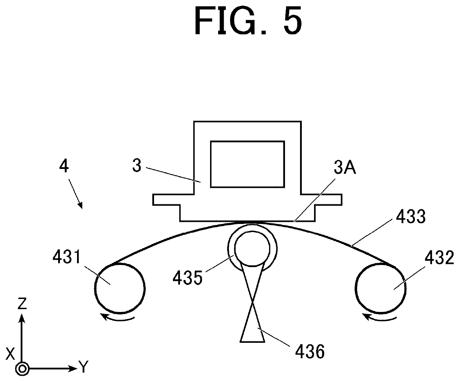

Figs. 4 and 5 are schematic diagrams of examples of the web-type wiping mechanism 4. The web-type wiping mechanism 4 shown in Figs. 4 and 5 includes a sending roller 431, a winding roller 432, and a web 433. The web 433 is fed from the sending roller 431 and wound around the winding roller 432. The web 433 is a long sheet made of, for example, nonwoven fabric.

In the web-type wiping mechanism 4 shown in Fig. 4, the web 433 is pressed toward the nozzle face 3A by the sponge member 434 and a plurality of springs 436. As the web 433 is relatively moved in the Y direction in this state, the web-type wiping mechanism 4 shown in Fig. 4 rubs the nozzle face 3A. Thus, the web-type wiping mechanism 4 shown in Fig. 4 cleans deposits on the nozzle face 3A.

In the web-type wiping mechanism 4 shown in Fig. 5, the web 433 is pressed toward the nozzle face 3A by the sponge roller 435 and the springs 436. In the web-type wiping mechanism 4 shown in Fig. 5, not only the web 433 is sent out while rubbing the nozzle face 3A, but also the sending roller 431, the winding roller 432, and the web 433 relatively move in the Y direction integrally. Thus, the web-type wiping mechanism 4 shown in Fig. 5 cleans deposits on the nozzle face 3A.

Next, the ink according to the present embodiment will be described.

The ink according to the present embodiment contains a silicone resin. The content A of the oily silicone compound in the ink according to the present embodiment is less than 1000 ppm by mass.

In the present embodiment, the "silicone resin" refers to a compound which has a polysiloxane structure and is solid in a standard state (temperature of 25 °C, 100 kPa). The solid includes a glass state and a rubber state.

When the ink contains a silicone resin, the slipperiness of the surface of the image is improved, and the color fastness to rubbing is improved.

The content B of the silicone resin with respect to the total amount of the ink is preferably 0.1% by mass or more. This improves the color fastness to rubbing of the image. The content B is preferably not greater than 10% by mass and more preferably not greater than 5% by mass. The silicone resin contained in the ink may be one kind or two or more kinds.

Examples of the silicone resin include silicone-modified urethane resin, silicone-modified epoxy resin, silicone-modified acrylic resin, silicone-modified polyimide, silicone-modified polyamide, silicone-modified polycarbonate, and silicone-modified polyester. The silicone-modified acrylic resin is, for example, a silicone-acrylic graft copolymer.

In the present embodiment, the "oily silicone compound" refers to a compound which is liquid in a standard state (temperature of 25 °C, 100 kPa) among organosilicon compound polymers having a polysiloxane structure as a basic skeleton.

When the content A of the oily silicone compound with respect to the total amount of the ink is less than 1000 ppm by mass, oil-like deposits are less likely to be generated on the nozzle face, and the ejection suitability of the ink is improved.

The content A of the oily silicone compound is preferably less than 500 ppm by mass, more preferably less than 250 ppm by mass. Thus, the oil-like deposits are less likely to be generated on the nozzle face, and the ejection suitability of the ink is further improved.

On the other hand, the content A is preferably not less than 1 ppm by mass. The oily silicone compound has the effect of improving the slipperiness of the surface of the image and improving the color fastness to rubbing of the image. Therefore, when the content A is 1 ppm by mass or more, the color fastness to rubbing of an image is further improved. The oily silicone compound contained in the ink may be one kind or two or more kinds.

Examples of oily silicone compounds include straight silicones such as dimethicone and trisiloxane, cyclic silicones such as cyclotetrasiloxane, cyclopentasiloxane, cyclohexasiloxane, and cyclomethicone, substituent-introduced compounds such as diphenyl dimethicone, phenyl trimethicone, diphenylsiloxyphenyl trimethicone, hydrogen dimethicone, methicone, methyl trimethicone, and modified silicone oils such as amino-modified silicones.

The oily silicone compound in the ink according to the present embodiment is preferably cyclotetrasiloxane. Cyclotetrasiloxane is particularly likely to be a cause of deposits to the nozzle surface. Therefore, when the content of cyclotetrasiloxane is less than 1000 ppm by mass, the ejection suitability of the ink is further improved. In addition, when the content of cyclotetrasiloxane is less than 500 mass ppm, the ejection suitability of the ink is further improved. When the content of the cyclotetrasiloxane is less than 250 mass ppm, the ejection suitability of the ink is further improved. Since cyclotetrasiloxane has the effect of improving the slipperiness of the surface of an image, the color fastness to rubbing of the image is further improved when the content of cyclotetrasiloxane is 1 ppm by mass or more.

The ratio (A/B) of the content A of the oily silicone compound to the content B of the silicone resin is preferably less than 0.06. This can make the color fastness to rubbing of the image and the ejection suitability of the ink compatible at a high level. The ratio (A/B) is more preferably less than 0.05, and still more preferably less than 0.04.

The ink may or may not contain a color material. An ink containing a color material can be used as, for example, a colored ink. An ink that does not contain a color material can be used as, for example, a pre-treatment liquid, an overcoat liquid, or the like.

The coloring material may be a pigment or a dye. In a case where the ink contains a pigment, the color fastness to rubbing of an image is likely to be a defect in the related art, but by applying the present embodiment, the color fastness to rubbing of an image is less likely to be a defect even when the ink contains a pigment.

As the pigment, an organic pigment or an inorganic pigment such as titanium oxide can be suitably used.

Examples of the organic pigments include azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, and diketopyrrolopyrrole.

Examples of the organic pigments for magenta or red include, C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of the organic pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155.

Examples of the organic pigment for green or cyan include C. I. Pigment Blue 15, C. I. Pigment Blue 15:2, C. I. Pigment Blue 15:3, C. I. Pigment Blue 16, C. I. Pigment Blue 60, and C. I. Pigment Green 7.

Examples of the organic pigment for black include C. I. Pigment Black 1, C. I. Pigment Black 6, and C. I. Pigment Black 7.

Titanium oxide has three crystal forms of an anatase type, a rutile type, and a brookite type, and general-purpose titanium oxides can be roughly classified into the anatase type and the rutile type. Although not particularly limited, a rutile type having a large refractive index and high concealability is preferable. Specific examples of the titanium oxide include TR series manufactured by Fuji Titanium Industry Co., Ltd., JR series manufactured by Tayca Corporation, and TIPAQUE manufactured by Ishihara Sangyo Kaisha, Ltd.

The pigment may be a self-dispersible pigment. The self-dispersible pigment is obtained by modifying a surface of a pigment particle with a group having a hydrophilic group, and has the pigment particle and the group having hydrophilicity bonded to the surface of the pigment particle.

Examples of the hydrophilic group include a carboxy group, a sulfonic acid group, and a phosphorus-containing group. Examples of the phosphorus-containing group include a phosphoric acid group, a phosphonic acid group, a phosphinic acid group, a phosphite group, and a phosphate group.

Examples of a commercially available self-dispersible pigment include Cab-O-Jet (registered trademark) 200K, 250C, 260M, and 270V (sulfonic acid group-containing self-dispersible pigments), Cab-O-Jet (registered trademark) 300K (carboxylic acid group-containing self-dispersible pigment), and Cab-O-Jet (registered trademark) 400K, 450C, 465M, 470V, and 480V (phosphoric acid group-containing self-dispersible pigments), manufactured by Cabot Corporation.

The content of the color material in the ink is preferably in a range of 1 to 10% by mass and more preferably in a range of 1 to 5% by mass with respect to the total amount of the ink. The ink may contain one color material or two or more color materials.

The ink may contain a resin other than the silicone resin. This improves the color fastness to rubbing of the image. The resin other than the silicone resin may be cationic or anionic.

Examples of the cationic resin include polyallylamine, an allylamine-diallylamine copolymer, polydiallylamine, polymethyldiallylamine, a diallylamine-sulfur dioxide copolymer, a methyldiallylamine-sulfur dioxide copolymer, polyvinylamine, polyethyleneimine, and polydiallyldimethylammonium chloride.

Examples of products containing the cationic resin include the following.
- RKW series and WEM series available from Taisei Fine Chemical Co., Ltd.
- Vinyblan 1008, 1028, 2687 manufactured by Nissin Chemical Industry Co. Ltd.
- Sumifloc FC-A, FC-B, FC-L, FC-373, FC-200, FC-C, and FC-E manufactured by Sumitomo Chemical Co., Ltd.
- Sanfloc C-450 and C-454 manufactured by Sanyo Chemical Industries, Ltd.
- Himoloc MP series, E series, M-966 manufactured by HYMO CORPORATION
- Epomin series manufactured by Nippon Shokubai Co., Ltd.
- Catiomaster series manufactured by Yokkaichi Chemical Co., Ltd.
- MPT series manufactured by Mitsubishi Pencil Co., Ltd.
- PAS series manufactured by Nittobo Medical Co., Ltd.

Examples of the anionic resin include polyester, polyurethane, polyacrylic, and polymethacrylic having an acidic group such as a carboxy group, a sulfonyl group, or a phosphorus-containing group (a phosphorate group or a phosphonate group).

Examples of products containing the anionic resin include the following.
- ACRYSET EMN series manufactured by Nippon Shokubai Co., Ltd.
- NeoCryl series manufactured by Kusumoto Chemicals, Ltd.
- Joncryl series from BASF SE
- TAKELAC series manufactured by Mitsui Chemicals, Inc.
- HUX series manufactured by ADEKA Corporation
- EVAFANOL series manufactured by Nicca Chemical Co., Ltd.
- SUPERFLEX series manufactured by DKS Co., Ltd.

The content of the resin other than the silicone resin in the ink is preferably in a range of 1 to 20 mass% and more preferably in a range of 5 to 10 mass% relative to the total amount of the ink. The resin other than the silicone resin contained in the ink may be one kid or two or more kinds.

The ink may contain a solvent. Examples of the solvent include an organic solvent and water. The content of the solvent in the ink is preferably in a range of 90 to 99 mass% with respect to the total amount of the ink. The ink may contain one kind of solvent or two or more kinds of solvents.

Examples of water include ion-exchanged water, distilled water, and pure water.

The organic solvent is preferably a water-soluble organic solvent.

Examples of the water-soluble organic solvents include monohydric alcohols (e.g., methanol, ethanol, propanol, pentanol, hexanol, cyclohexanol, benzyl alcohols), poly hydric alcohols (e.g., ethylene glycol, diethylene glycol, triethylene glycol, tetraethylene glycol, polyethylene glycol, propylene glycol, dipropylene glycol, tripropylene glycol, polypropylene glycol, glycerin, butylene glycol, hexanediol, pentanediol, hexanetriol, thiodiglycol, a compound represented by the following general formula (1), 1,2-butanediol, 1,3-butanediol, 1,2-pentanediol, 1,2-hexanediol, 1,6-hexanediol, 1,2-heptanediol, trimethylolpropane), polyhydric alcohol ethers (e.g., ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, diethylene glycol dimethyl ether, propylene glycol monomethyl ether, propylene glycol monoethyl ether, triethylene glycol monomethyl ether, tetraethylene glycol monomethyl ether, tripropylene glycol monoethyl ether), amines (e.g., ethanol amine, N-ethyldiethanolamine, morpholine, N-ethylmorpholine, ethylene diamine, diethylene diamine, triethylene tetramine), amides (e.g., formaldehyde, N,N-dimethylformamide, N,N-dimethylacetamide), heterocycles (e.g., 2-pyrrolidone, N-methyl-2-pyrrolidone, N-cyclohexyl-2-pyrrolidone, 2-oxazolidone, 1,3-dimethyl-2-imidazolidine), sulfoxides (e.g., dimethylsulfoxide), and sulfones (e.g., sulfolane).

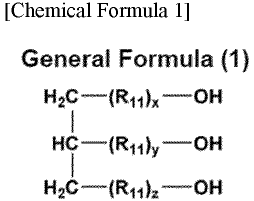

[In the general formula (1), R11 represents an ethylene glycol group or a propylene glycol group. All of x, y, and z are positive integers. The sum of x, y, and z is 3 to 30.]

The ink may contain a surfactant. Examples of the surfactant include an anionic surfactant, a cationic surfactant, a nonionic surfactant, and an amphoteric surfactant.

The ink may contain a preservative. Examples of the preservative include an aromatic halogen compound (e.g., Preventol CMK), methylene dithiocyanate, a halogen-containing nitrogen-sulfur compound, and 1,2-benzisothiazolin-3-one (e.g., PROXEL GXL).

The ink may contain a pH adjuster. Examples of the pH adjuster include citric acid, sodium citrate, hydrochloric acid, sodium hydroxide, and the like.

The ink may further contain components other than those described above as necessary within a range that does not impair the effects of the present embodiment.

The ink can be prepared by mixing the above-described components. The mixing method is not particularly limited, and may be a conventionally known method. The silicone resin is preferably mixed with other components in the form of an aqueous dispersion. In a case of preparing an ink containing a pigment, it is preferable to prepare a pigment dispersant containing the pigment, a pigment dispersant, water, and the like and then mix the pigment dispersion liquid with other components. This makes it possible to achieve both the color fastness to rubbing of the image and the ejection suitability of the ink.

As described above, the image forming system according to the present embodiment is an image forming system using ink, and includes an inkjet head and a wiping mechanism. The inkjet head ejects ink onto a recording medium. The wiping mechanism rubs and cleans the nozzle face of the inkjet head. The ink contains a silicone resin. The content A of the oily silicone compound in the ink is less than 1000 ppm by mass. This makes it possible to achieve both the color fastness to rubbing of the image and the ink ejection suitability.

The oily silicone compound is preferably cyclotetrasiloxane. Cyclotetrasiloxane is particularly likely to be a cause of deposits to the nozzle surface. Therefore, when the content of cyclotetrasiloxane is less than 1000 ppm by mass, the ejection suitability of the ink is further improved.

The content of cyclotetrasiloxane in the ink is preferably 1 ppm by mass or more and less than 250 ppm by mass. When the content is less than 250 ppm by mass, oil-like deposits are less likely to be generated on the nozzle face, and the ejection suitability of the ink is further improved. When the content is 1 ppm by mass or more, the color fastness to rubbing of the image is further improved.

The content B of the silicone resin in the ink is preferably 0.1% by mass or more. This improves the color fastness to rubbing of the image.

The ratio (A/B) of the content A of the oily silicone compound to the content B of the silicone resin in the ink is preferably less than 0.06. This can make the color fastness to rubbing of the image and the ejection suitability of the ink compatible at a high level.

The ink may contain a pigment. In a case where the ink contains a pigment, the color fastness to rubbing of an image is likely to be a defect in the related art, but by applying the present embodiment, the color fastness to rubbing of an image is less likely to be a defect even when the ink contains a pigment.

It is preferable that the wiping mechanism is of a roller type and includes a water-absorbing sponge roller. Thus, the cleaning performance for the nozzle face is improved.

The recording medium may be a fabric. In a case where the recording medium is a fabric, the color fastness to rubbing of the image is likely to be a defect in the related art, but by applying the present embodiment, the color fastness to rubbing of an image is less likely to be a defect even when the recording medium is a fabric.

The image forming method of the present embodiment is an image forming method using an ink. The image forming method includes a step in which the inkjet head ejects ink onto the recording medium, and a step in which the wiping mechanism rubs and cleans the nozzle face of the inkjet head. The ink contains a silicone resin. The content A of the oily silicone compound in the ink is less than 1000 ppm by mass. This makes it possible to achieve both the color fastness to rubbing of the image and the ink ejection suitability.

Although embodiments of the present invention have been described and illustrated in detail, the disclosed embodiments are for purposes of illustration and example only, and are not intended to be limiting. The scope of the present invention should be interpreted by the terms of the claims.

### [Examples]

Hereinafter, the present invention will be specifically described with reference to Examples, but the present invention is not limited thereto. In the following Examples, operations were performed in a standard environment of 25°C and 50% RH unless otherwise specified. Furthermore, unless otherwise specified, "%," "ppm," and "part(s)" mean "% by mass," "ppm by mass," and "parts by mass," respectively.

### [Preparation of Pretreatment Liquid]

The following materials were mixed to obtain an inkjet pretreatment liquid.

| | |
|---|---|
| Propylene glycol (moisturizing solvent) | 20 mass% |
| Glycerin (moisturizing solvent) | 10 mass% |
| Surfynol E1010 (surfactant) | 0.1% by weight |
| Proxcel GXL(S) (preservative) | 0.05 mass% |
| Quaternary salt of alkylamine-epichlorohydrin | 2% by mass |
| Ion exchange water | 67.85 mass% |

Surfynol E1010 is an acetylene glycol-based surfactant manufactured by Nissin Chemical Industry Co., Ltd. Proxcel GXL(S) is manufactured by Lonza K.K.

### [Preparation of Pigment Dispersion Liquid]

The pigment dispersant [7 parts by mass] and water [63 parts by mass] were mixed. As the pigment dispersant, styrene-butyl acrylate-methacrylate copolymers (anionic dispersant, weight-average molecular weight: 16000, anionic-group equivalency: 3.5 meq/g) were used. The resulting mixed solution was warmed and stirred. To this mixed solution, sodium hydroxide (a neutralization degree of 50%) was added to prepare a neutralized product of the pigment dispersant. To this mixed solution, carbon black (30 parts by mass) was added and premixed. The carbon black in the mixed solution was dispersed using a sand grinder filled with 0.5 mm zirconia beads at a volume ratio of 50%. Thus, a black pigment dispersion liquid having a pigment concentration (= solid content ratio) of 30 mass% was obtained.

### [Silicone Material]

As the silicone material, products manufactured by Nissin Chemical Industry Co., Ltd. listed in Table I were used. All of the silicone materials used contained a silicone-acrylic graft copolymer as a silicone resin and cyclotetrasiloxane as an oily silicone compound. The solid content ratio in each silicone material is the same as the content ratio of the silicone resin.

**[Table 1]**

| Silicone Material Product Name | Silicone Resin (Silicone Acrylic Graft Copolymer) | | | Oily Silicone Compound (Cyclotetrasiloxane) |
|---|---|---|---|---|
| | Glass Transition Temperature [°C] | Acid Value | Content [mass%] | Content [mass ppm] |
| CHALINE FE230N | -50 | 7.7 | 30 | 10000 |
| CHALINE E370 | 105 | 0.2 | 45 | 21000 |
| CHALINE E790 | 105 | 0.3 | 43 | 23000 |
| CHALINE LC190 | 105 | 0.2 | 43 | 28000 |

### [Preparation of Inks to be Evaluated]

Inks 1 to 14 were prepared by appropriately mixing the above-described pigment dispersion liquid, a fixing resin dispersion liquid (TAKELAC W-6061, manufactured by Mitsui Chemicals, Inc., solid content ratio 30 mass%), the above-described various silicone materials, cyclotetrasiloxane, various organic solvents, surfactants (Surfynol E1010, manufactured by Nissin Chemical Industry Co., Ltd., acetylene glycol-based), preservatives (Proxcel GXL(S), manufactured by Lonza K.K.) and ion-exchanged distilled water so as to obtain the compositions described in Table II and Table III. The cyclotetrasiloxane in Inks 1 to 13 was derived from the various silicone materials described above. The cyclotetrasiloxane in the ink 14 was added alone. The water as the remainder includes water brought in by the pigment dispersion liquid or the like and separately added ion exchange water.

**[Table 2]**

| | | | Ink 1 | Ink 2 | Ink 3 | Ink 4 | Ink 5 | Ink 6 | Ink 7 |
|---|---|---|---|---|---|---|---|---|---|
| Content [mass%] | Pigment | Solid Content of Pigment Dispersion | 3 | 3 | 3 | 3 | 3 | 3 | 3 |
| | Fixing Resin | Solid Content of TAKELAC W-6061 | 0 | 0 | 0 | 0 | 0 | 0 | 0 |
| | Silicone Resin (B) | Solid Content of CHAUNE FE230N | 0.45 | 0 | 0 | 0 | 0 | 0 | 0 |
| | | Solid Content of CHALINE E370 | 0 | 0.45 | 0 | 0 | 0 | 0 | 0 |
| | | Solid Content of CHAUNE E790 | 0 | 0 | 0.45 | 0 | 0.05 | 0.1 | 1 |
| | | Solid Content of CHAUNE LC190 | 0 | 0 | 0 | 0.45 | 0 | 0 | 0 |
| | Oily Silicone Compound (A) | Cyclotetrasiloxane | 0.0150 | 0.0210 | 0.0241 | 0.0293 | 0.0027 | 0.0053 | 0.0535 |
| | Organic Solvent | Propylene Glycol | 20 | 20 | 20 | 20 | 20 | 20 | 20 |
| | | Glycerin | 10 | 10 | 10 | 10 | 10 | 10 | 10 |
| | Surfactant | E1010 | 0.1 | 0.1 | 0.1 | 0.1 | 0.1 | 0.1 | 0.1 |
| | Preservative | Proxcel GXL(S) | 0.05 | 0.05 | 0.05 | 0.05 | 0.05 | 0.05 | 0.05 |
| | Water | | Remainder | Remainder | Remainder | Remainder | Remainder | Remainder | Remainder |
| | Total | | 100 | 100 | 100 | 100 | 100 | 100 | 100 |
| A/B | | | 0.033 | 0.047 | 0.053 | 0.065 | 0.053 | 0.053 | 0.053 |

**[Table 3]**

| | | | Ink 8 | Ink 9 | Ink 10 | Ink 11 | Ink 12 | Ink 13 | Ink 14 |
|---|---|---|---|---|---|---|---|---|---|
| Content [mass%] | Pigment | Solid Content of Pigment Dispersion | 3 | 3 | 3 | 3 | 3 | 0 | 0 |
| | Fixing Resin | Solid Content of TAKELAC W-6061 | 0 | 0 | 0 | 8 | 10 | 10 | 10 |
| | Silicone Resin (B) | Solid Content of CHAUNE FE230N | 0 | 2 | 3.5 | 0.45 | 0.45 | 0.45 | 0 |
| | | Solid Content of CHALINE E370 | 0 | 0 | 0 | 0 | 0 | 0 | 0 |
| | | Solid Content of CHAUNE E790 | 2 | 0 | 0 | 0 | 0 | 0 | 0 |
| | | Solid Content of CHALINE LC190 | 0 | 0 | 0 | 0 | 0 | 0 | 0 |
| | Oily Silicone Compound (A) | Cyclotetrasiloxane | 0.1070 | 0.0667 | 0.1167 | 0.0150 | 0.0150 | 0.0150 | 0.0200 |
| | Organic Solvent | Propylene Glycol | 20 | 20 | 20 | 20 | 20 | 20 | 20 |
| | | Glycerin | 10 | 10 | 10 | 10 | 10 | 10 | 10 |
| | Surfactant | E1010 | 0.1 | 0.1 | 0.1 | 0.1 | 0.1 | 0.1 | 0.1 |
| | Preservative | Proxcel GXL(S) | 0.05 | 0.05 | 0.05 | 0.05 | 0.05 | 0.05 | 0.05 |
| | Water | | Remainder | Remainder | Remainder | Remainder | Remainder | Remainder | Remainder |
| | Total | | 100 | 100 | 100 | 100 | 100 | 100 | 100 |
| A/B | | | 0.053 | 0.033 | 0.033 | 0.033 | 0.033 | 0.033 | |

### [Preparation of Coloring Liquid]

The coloring liquid was prepared by appropriately mixing the above-described pigment dispersion liquid, various organic solvents, a surfactant (Surfynol E1010, manufactured by Nissin Chemical Industry Co., Ltd., acetylene glycol type), a preservative (Proxcel GXL (S), manufactured by Lonza K.K.), and ion exchanged water so as to obtain the composition described in Table IV The water as the remainder includes water brought in by the pigment dispersion liquid or the like and separately added ion-exchanged water.

**[Table 4]**

| | | | Coloring Liquid |
|---|---|---|---|
| Content [mass%] | Pigment | Solid Content of Pigment Dispersion | 3 |
| | Organic Solvent | Propylene Glycol | 20 |
| | | Glycerin | 10 |
| | Surfactant | E1010 | 0.1 |
| | Preservative | Proxcel GXL(S) | 0.05 |
| | Water | | Remainder |
| | Total | | 100 |

### [Evaluation of Color Fastness to Rubbing]

An image was formed on a fabric by an inkjet method using a simple printing tester equipped with an inkjet head KM1024i (manufactured by Konica Minolta, Inc.). The image was a 100% solid image of 200 mm × 200 mm. Cotton satin was used as the cloth.

Image formation using Inks 1 to 12 containing the pigment was specifically performed according to the following procedure. The pretreatment solution and an ink to be evaluated (any of Inks 1 to 12) prepared as described above were introduced into the simple image printing tester. The pretreatment solution and the ink to be evaluated were continuously applied onto the fabric in this order to form an image. The application amount of the pretreatment liquid was 15 g/m². The application amount of the ink was 30 g/m². The fabric after the image formation was removed off from the belt, and dried at 150°C for 3 minutes.

Image formation using Ink 13 and Ink 14 containing no pigment was specifically performed according to the following procedure. Here, Inks 13 and 14 were used as overcoat liquids. The pretreatment solution, the coloring liquid, and the ink to be evaluated (either one of Inks 13 and 14) prepared as described above were introduced into the simple printing tester. The pretreatment liquid, the coloring liquid, and the ink to be evaluated were continuously applied onto a fabric in this order to form an image. The application amount of the pretreatment liquid was 15 g/m². The application amount of each of the coloring liquid and the ink to be evaluated was 30 g/m². The fabric after the image formation was removed off from the belt, and dried at 150°C for 3 minutes.

The obtained fabric after the image formation was subjected to a dry rubbing fastness test with a Type II tester in accordance with the conditions of JIS L0849 (2013) to evaluate the color fastness to rubbing. To be specific, a cotton fabric was used to rub a region of 100 mm (horizontal) × 100 mm (vertical) of the image formed portion back and forth 100 times under a 200 g load. After the rubbing, the color transferred to the cotton fabric was observed. The color fastness to rubbing was evaluated based on the results of the observation and the following criteria. An evaluation result of 3 or more is within an allowable range. The evaluation results are as described in Table V
5: No color transfer was observed.
4: Almost no color transfer was observed.
3: Color transfer was observed, but within an acceptable range.
2: Color transfer was observed and was not within an acceptable range.
1: Significant color transfer was observed.

### [Evaluation of Continuous Ejection Property]

The ink to be evaluated was introduced into an inkjet head KM1024i (manufactured by Konica Minolta, Inc.). To be specific, about 10 cc of the ink was pushed out from the nozzle by a pressure of 100 kPa or less. Thereafter, ink droplets remaining on the nozzle face were cleaned by head maintenance described in Table V Thereafter, a continuous ejection test was performed for 30 minute, and nozzle clogging and nozzle bending were observed. Based on the observation results and the following criteria, the continuous ejection properties were evaluated. An evaluation result of 3 or more is within an allowable range. The evaluation results are as described in Table V
5: Neither nozzle clogging nor nozzle bending occurred.
4: Nozzle clogging did not occur, but slight nozzle bending occurred.
3: Slight nozzle clogging and nozzle bending occurred with a lapse of time.
2: Nozzle clogging and nozzle bending occurred with a lapse of time.
1: Nozzle clogging and nozzle bending occurred from the initial stage.

### [Maintainability]

After the continuous ejection test, the ink droplets remaining on the nozzle face were cleaned by the head maintenance described in Table V Thereafter, the nozzle plate face was observed. The maintainability was evaluated on the basis of the observation results and the following criteria. An evaluation result of 3 or more is within an allowable range. The evaluation results are as described in Table V
5: Neither deposit nor wiping trace was observed.
4: No deposit was observed, but slight wiping trace on the end portion of the nozzle plate was observed.
3: No deposit was observed, but a wiping trace was observed.
2: Deposits were present on a part of the nozzle plate.
1: Deposits were observed on the entirety of the nozzle plate.

**[Table 5]**

| | Ink | | | | Head Maintenance | | Rub fastness | Ejection Stability | |
|---|---|---|---|---|---|---|---|---|---|
| | No. | B | A | A/B | Method | Presence of Rubbing | | Continuous Ejection Property | Maintainability |
| Example 1 | 1 | 0.45 | 0.0150 | 0.033 | Blade | Yes | 4 | 5 | 4 |
| Example 2 | 2 | 0.45 | 0.0210 | 0.047 | Blade | Yes | 4 | 5 | 4 |
| Example 3 | 3 | 0.45 | 0.0241 | 0.053 | Blade | Yes | 4 | 5 | 4 |
| Example 4 | 4 | 0.45 | 0.0293 | 0.065 | Blade | Yes | 4 | 5 | 3 |
| Example 5 | 5 | 0.05 | 0.0027 | 0.053 | Blade | Yes | 3 | 5 | 4 |
| Example 6 | 6 | 0.10 | 0.0053 | 0.053 | Blade | Yes | 4 | 5 | 4 |
| Example 7 | 7 | 1.00 | 0.0535 | 0.053 | Blade | Yes | 4 | 3 | 3 |
| Example $ | 9 | 2.00 | 0.0667 | 0.033 | Blade | Yes | 4 | 3 | 3 |
| Example 9 | 11 | 0.45 | 0.0150 | 0.033 | Blade | Yes | 5 | 5 | 4 |
| Example 10 | 12 | 0.45 | 0.0150 | 0.033 | Blade | Yes | 5 | 5 | 4 |
| Example 11 | 13 | 0.45 | 0.0150 | 0.033 | Blade | Yes | 5 | 5 | 4 |
| Example 12 | 12 | 0.45 | 0.0150 | 0.033 | Web | Yes | 5 | 5 | 4 |
| Example 13 | 12 | 0.45 | 0.0150 | 0.033 | Roller | Yes | 5 | 5 | 5 |
| Comparative Example 1 | 8 | 2.00 | 0.1070 | 0.053 | Blade | Yes | 4 | 2 | 2 |
| Comparative Example 2 | 10 | 3.50 | 0.1167 | 0.033 | Blade | Yes | 4 | 1 | 2 |
| Comparative Example 3 | 10 | 3.50 | 0.1167 | 0.033 | Roller | Yes | 4 | 1 | 2 |
| Comparative Example 4 | 10 | 3.50 | 0.1167 | 0.033 | Web | No | 4 | 1 | 1 |
| Comparative Example 5 | 9 | 2.00 | 0.0667 | 0.033 | Web | No | 4 | 2 | 1 |
| Comparative Example 6 | 14 | 0.00 | 0.0200 | - | Blade | Yes | 2 | 5 | 4 |

In Examples 1 to 23, Comparative Examples 1 to 3 and 6, head maintenance was performed with a wiping mechanism that rubs and cleans the nozzle face of the inkjet head. The wiping mechanism shown in Fig. 3 was used for the blade-type head maintenance. The wiping mechanism shown in Fig. 4 was used for the web-type head maintenance, and a nonwoven fabric was used as a web. The wiping mechanism shown in Fig. 2 was used for the roller-type head maintenance, and a water-absorbing sponge roller was used as the roller. In Comparative Examples 4 and 5, head maintenance was performed by a mechanism in which the cleaning was performed only by pressing the web against the nozzle face without rubbing the nozzle face with the web.

From the above results, it was confirmed that the image forming method of the present embodiment can achieve both the color fastness to rubbing of the image and the ejection suitability of the ink.

Although embodiments of the present invention have been described and shown in detail, the disclosed embodiments are made for purposes of illustration and example only and not limitation. The scope of the present invention should be interpreted by terms of the appended claims.

## Claims

1. An image forming system using ink, the image forming system comprising:
an inkjet head that ejects the ink onto a recording medium; and
a wiping mechanism that rubs and cleans a nozzle face of the inkjet head,
wherein the ink contains a silicone resin;
wherein a content A of an oily silicone compound in the ink is less than 1000 ppm by mass.

2. The image forming system according to claim 1,
wherein the oily silicone compound is cyclotetrasiloxane.

3. The image forming system according to claim 1 or 2,
wherein the content A of the oily silicone compound in the ink is 1 ppm by mass or more and less than 250 ppm by mass.

4. The image forming system according to any one of the preceding claims,
a content B of the silicone resin in the ink is 0.1% by mass or more.

5. The image forming system according to claim 2,
a ratio (A/B) of the content A of the oily silicone compound to a content B of the silicone resin in the ink is less than 0.06.

6. The image forming system according to any one of the preceding claims,
wherein the ink contains a pigment.

7. The image forming system according to any one of the preceding claims,
wherein the wiping mechanism is of a roller type and includes a water-absorbent sponge roller.

8. The image forming system according to any one of the preceding claims,
wherein the recording medium is a fabric.

9. An image forming method using ink, the method comprising:
ejection of the ink by an inkjet head to a recording medium; and
cleaning of a nozzle face of the inkjet head by a wiping mechanism,
wherein the ink contains a silicone resin,
wherein a content A of an oily silicone compound in the ink is less than 1000 ppm by mass.
